# EUROPEAN PATENT APPLICATION

(11) **EP 4 811 233 A1**
(43) Date of publication of application: **23.09.2026**
(21) Application number: 26161946.4
(22) Date of filing: 03.03.2026
(51) Int. Cl.: G06Q 10/06, G01M 3/28, G06Q 10/063, G06Q 50/06

(54) **SETTING PROGRAM, SETTING METHOD, AND WATER LEAKAGE MANAGEMENT SYSTEM**

(30) Priority: 17.03.2025 JP 2025042854
(71) Applicant: Yokogawa Electric Corporation, Musashino-shi, Tokyo 180-8750 (JP)
(72) Inventor: SASAKI, Hirokazu, Musashino-shi, Tokyo, 180-8750 (JP); ABE, Koki, Musashino-shi, Tokyo, 180-8750 (JP); SAKASHITA, Mitsuru, Musashino-shi, Tokyo, 180-8750 (JP); NAKADA, Daisuke, Musashino-shi, Tokyo, 180-8750 (JP); KAWATE, Kousuke, Musashino-shi, Tokyo, 180-8750 (JP)
(74) Representative: Zimmermann, Tankred Klaus

(57) **Abstract**

A setting program is configured to cause a processor (11) to perform operations including a step of acquiring retrieval conditions used to set a time period with low water usage as an analysis time period for presence or absence of water leakage in a water purification management area (80), and at least one of a step of retrieving and displaying a candidate date that can be set as a special day with high water usage in the water purification management area (80) based on the retrieval conditions, and a step of retrieving and displaying a candidate time period that can be set as the analysis time period on a day other than the special day based on the retrieval conditions.

## Description

### TECHNICAL FIELD

The present disclosure relates to a setting program, a setting method, and a water leakage management system for setting a time period to be analyzed for the presence or absence of water leakage.

### BACKGROUND

As described in Patent Literature (PTL) 1, a method is known for diagnosing that a water leak has occurred in a case in which the water usage in the most recent predetermined period is greater by a predetermined amount than the water usage in a predetermined period prior to the most recent predetermined period.

### CITATION LIST

### Patent Literature

PTL 1: JP 2024-145058 A

In the case of detecting a water leak by analyzing the water flow rate, it is preferable to perform the analysis during time periods with low water usage. When people manually extract a time period with low water usage, they rely on experience or intuition.

It would be helpful to provide a setting program, a setting method, and a water leakage management system that can easily set a time period for analyzing water flow rate to detect water leakage.
(1) A setting program according to several embodiments is configured to cause a processor to perform operations comprising a step of acquiring retrieval conditions used to set a time period with low water usage as an analysis time period for presence or absence of water leakage in a water purification management area, and at least one of a step of retrieving and displaying a candidate date that can be set as a special day with high water usage in the water purification management area based on the retrieval conditions, and a step of retrieving and displaying a candidate time period that can be set as the analysis time period on a day other than the special day based on the retrieval conditions. With this configuration, time periods with low water usage can be easily extracted without relying on human experience or intuition. As a result, the user can easily set the time period for analyzing the water flow rate in order to detect a water leak.
(2) In the setting program according to (1), the setting program may cause the processor to perform at least one of a step of setting the special day from among a plurality of the candidate dates and a step of setting the analysis time period from among a plurality of the candidate time periods. In this way, the time period for analyzing the water flow rate to detect a water leak can be easily set.
(3) In the setting program according to (2), the setting program may cause the processor to perform a step of retrieving and displaying the candidate time period for a day other than the special day after the step of setting the special day. This configuration improves the accuracy of retrieving time periods with low water usage.
(4) In the setting program according to any one of (1) to (3), the step of retrieving and displaying the candidate time period may comprise displaying the candidate time period that was retrieved and a value or statistical value of water usage in the candidate time period in a manner allowing comparison with the analysis time period currently set and a value or statistical value of water usage in the analysis time period. By such display, the user can easily determine whether to change the analysis time period.
(5) In the setting program according to (4), the step of retrieving and displaying the candidate time period may comprise displaying the candidate time period that was retrieved in a case of recommending to change the analysis time period currently set to the candidate time period that was retrieved. By such display, the user can easily determine whether to change the analysis time period.
(6) In the setting program according to any one of (1) to (5), the retrieval conditions may comprise a duration of a time period for retrieval as the candidate time period in the water purification management area. Being able to set the duration of the time period increases the flexibility in setting the analysis time period.
(7) In the setting program according to any one of (1) to (6), the retrieval conditions may comprise a condition for retrieving an event that is scheduled to be held in the water purification management area and that will have high water usage. With this configuration, candidate dates are extracted efficiently.
(8) In the setting program according to any one of (1) to (7), the retrieval conditions may comprise a condition for retrieving a future temperature or humidity in the water purification management area. With this configuration, candidate dates are extracted efficiently.
(9) A setting method according to several embodiments comprises a step of acquiring retrieval conditions used to set a time period with low water usage as an analysis time period for presence or absence of water leakage in a water purification management area, and at least one of a step of retrieving and displaying a candidate date that can be set as a special day with high water usage in the water purification management area based on the retrieval conditions, and a step of retrieving and displaying a candidate time period that can be set as the analysis time period on a day other than the special day based on the retrieval conditions.
(10) A water leakage management system according to several embodiments comprises a processor, wherein the processor is configured to acquire retrieval conditions used to set a time period with low water usage as an analysis time period for presence or absence of water leakage in a water purification management area, and perform at least one of a) retrieving and displaying a candidate date that can be set as a special day with high water usage in the water purification management area based on the retrieval conditions, and b) retrieving and displaying a candidate time period that can be set as the analysis time period on a day other than the special day based on the retrieval conditions.

According to the setting program, setting method, and water leakage management system of the present disclosure, a time period for analyzing the water flow rate to detect a water leak can be easily set.

### BRIEF DESCRIPTION OF THE DRAWINGS

In the accompanying drawings:
FIG. 1 is a block diagram illustrating an example configuration of a water supply system according to the present disclosure;
FIG. 2 is a flowchart illustrating examples procedures of a setting method according to the present disclosure;
FIG. 3 is a block diagram illustrating an example of a retrieval operation using a water demand prediction system;
FIG. 4 is a diagram illustrating an example of a setting screen for retrieval conditions for candidate dates;
FIG. 5 is a diagram illustrating an example of retrieval results of candidate dates by the water demand prediction system;
FIG. 6 is a diagram illustrating an example of a setting screen for retrieval conditions for candidate time periods;
FIG. 7 is a diagram illustrating an example of retrieval results of candidate time periods by the water demand prediction system;
FIG. 8 is a block diagram illustrating an example of a retrieval operation using generative AI;
FIG. 9 is a diagram illustrating an example of a screen for inputting a question to the generative AI;
FIG. 10 is a diagram illustrating an example of a screen for inputting keywords, to be applied to a question template, for event retrieval;
FIG. 11 is a diagram illustrating an example of retrieval results for an event using generative AI;
FIG. 12 is a diagram illustrating an example of a screen for inputting keywords, to be applied to a question template, for retrieving the water usage by day of the week from past data;
FIG. 13 is a diagram illustrating an example of retrieval results of water usage by day of the week using generative AI;
FIG. 14 is a diagram illustrating an example of a screen for inputting keywords, to be applied to a question template, for retrieving a time period with low water usage by day of the week from past data;
FIG. 15 is a block diagram illustrating an example of a retrieval operation using an Internet site;
FIG. 16 is a diagram illustrating an example of a setting screen in which weather conditions are used as retrieval conditions for candidate dates; and
FIG. 17 is a diagram illustrating an example of retrieval results of candidate dates based on the weather conditions.

### DETAILED DESCRIPTION

### (Comparative example)

To manage a water supply, it is necessary to check for leaks from water pipes. Leaks from water pipes tend to increase over time. Therefore, if periodic monitoring and analysis of the flow rate of water reveals that the flow rate tends to increase, it can be determined that a water leak may be occurring. In this case, by analyzing flow rates during times when water usage is known to be low, it is easier to observe an increase in flow rate due to a water leak.

A method according to a comparative example could be to periodically monitor the flow rate of water and have a person manually set the time period to be analyzed. In this case, first, special days on which water usage is likely to be high are extracted and excluded. A special day is, for example, a day when an event that uses a large amount of water is held. Next, on days excluding special days, time periods when water usage is low are extracted and set as time periods to be analyzed. A time period when water usage is low is, for example, late night hours. The water flow rate during the time period set as the analysis target is monitored, and if there is an increasing trend, it is determined that a water pipe may be leaking.

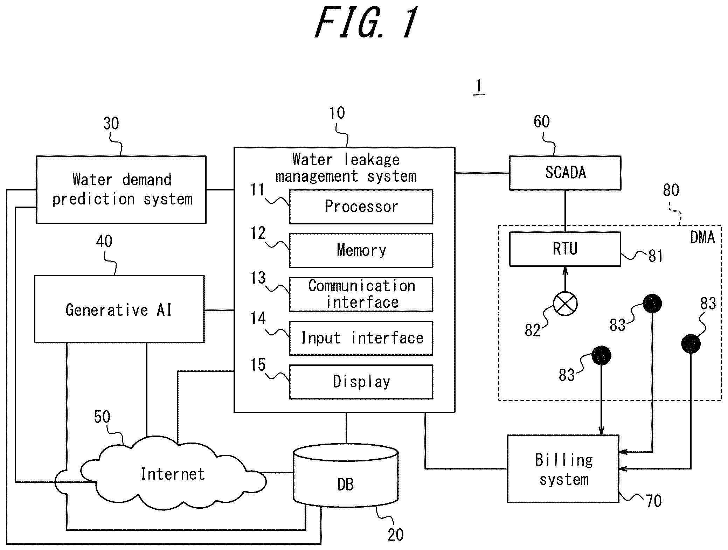

However, the method according to the comparative example relies on human experience or intuition and therefore has problems such as being inaccurate, inefficient, and prone to omissions. In addition, the work is time-consuming. Hereinafter, in the present disclosure, a setting program, a setting method, and a water leakage management system 10 (see FIG. 1) that can easily set the time period for analyzing the water flow rate to detect a water leak from a water pipe will be described.

### (Configuration example of water supply system 1 including water leakage management system 10)

As illustrated in FIG. 1, the water leakage management system 10 is included in a water supply system 1. The water supply system 1 includes a water leakage management system 10, a database (DB) 20, a water demand prediction system 30, and a generative AI 40. The water leakage management system 10 and the DB 20 are connected so as to be able to communicate with each other. The water leakage management system 10, the water demand prediction system 30, and the generative AI 40 are connected to the Internet 50. The DB 20 may be connected to the Internet 50. Services provided on the Internet 50 may be used as the water leakage management system 10, DB 20, water demand prediction system 30, or generative AI 40.

The water supply system 1 also includes a Supervisory Control and Data Acquisition (SCADA) 60, a billing system 70, and a District Metered Area (DMA) 80. The DMA 80 is an area demarcated for the purpose of managing the water supply. In the present disclosure, the DMA 80 corresponds to a water purification management area. The number of DMAs 80 included in the water supply system 1 is not limited to one and may be two or more. In the DMA 80, a Remote Terminal Unit (RTU) 81, a flow meter 82, and a water meter 83 are installed. The flow meter 82 measures the flow rate of the water supply in the DMA 80. The RTU 81 acquires measurement results from measuring instruments such as a flow meter 82 or a pressure transmitter, and outputs the results to the SCADA 60. More than one set of an RTU 81 and a flow meter 82 may be installed in one DMA 80. The water meter 83 measures the amount of water used by water consumers, such as residences or facilities included in the DMA 80.

The SCADA 60 acquires the measurement results for the water flow rate of the DMA 80 measured by the flow meter 82 from the RTU 81 and stores the measurement results in the DB 20 via the water leakage management system 10. The billing system 70 acquires the measurement results for the water usage of the water consumers included in the DMA 80 from the water meter 83 and stores the measurement results in the DB 20 via the water leakage management system 10.

### <Water leakage management system 10>

The water leakage management system 10 includes a processor 11, a memory 12, a communication interface 13, an input interface 14, and a display 15.

The processor 11 may include, but is not limited to, a general-purpose processor or a dedicated processor specialized for a particular process. The processor may include a central processing unit (CPU), a graphics processing unit (GPU), or the like. The processor 11 may realize various functions of the water leakage management system 10 by executing a predetermined program. At least some of the functionality of the processor 11 may be replaced by one or more dedicated circuits. The dedicated circuit may include a field-programmable gate array (FPGA), an application specific integrated circuit (ASIC), or the like.

The memory 12 stores various information used in the operation of the water leakage management system 10, programs for realizing the functions of the water leakage management system 10, and the like. The memory 12 may store system programs, application programs, and the like. The memory 12 may be configured to include, for example, a semiconductor memory, a magnetic memory, or an optical memory. The memory 12 may be configured to include an electromagnetic storage medium such as a magnetic disk. The memory 12 may be configured to include a non-transitory computer readable medium. The memory 12 may function as, for example, a main storage device, an auxiliary storage device, or a cache memory. The memory 12 may function as a working memory for the processor 11. The memory 12 may be configured integrally with the processor 11 or may be configured separately from the processor 11. The memory 12 may be configured as a storage device separate from the water leakage management system 10.

The communication interface 13 may be configured to include a communication module configured to be capable of communicating with external devices such as the SCADA 60, billing system 70, DB 20, water demand prediction system 30, generative AI 40, or a client such as a PC or mobile device, or with external networks such as the Internet 50. The communication module may be configured to be capable of communicating with external devices such as the DB 20, water demand prediction system 30, or generative AI 40 via a network, or may be configured to be capable of communicating directly without going through a network. The communication module may be compatible with mobile communication standards such as 4G (4^{th} Generation) or 5G (5^{th} Generation). The communication module may be compatible with various communication standards such as LAN (Local Area Network), USB (Universal Serial Bus), RS-232C, or RS-485. The communication module may support various communication protocols such as OPC Unified Architecture (OPC UA), Hypertext Transfer Protocol (HTTP), Hypertext Transfer Protocol Secure (HTTPS), Simple Mail Transfer Protocol (SMTP), Post Office Protocol (POP), Internet Message Access Protocol (IMAP), File Transfer Protocol (FTP), Secure Shell (SSH), MODBUS, Message Queuing Telemetry Transport (MQTT), or Deeply Programmable Network (DPN). The communication module may support wired or wireless communication standards. The communication module is not limited to these and may be compatible with various communication standards.

The input interface 14 may include an input device that accepts operation input by a user of the water leakage management system 10, or input of information, data, or the like. The input device may include, for example, a touch sensor or a pointing device such as a mouse. The input device may be configured as a touch display integrated with the display device of the display 15 described below. The input device may include physical keys. The input device may include an audio input device such as a microphone.

The display 15 may include a display device that displays characters, symbols, figures, images, or the like so as to provide visual information to the user of the water leakage management system 10. The display device may include various displays such as a liquid crystal display, an organic ElectroLuminescence (EL) or inorganic EL display, or a Light Emitting Diode (LED) display.

The water leakage management system 10 may be realized in an on-premise environment using a computer such as a server. The water leakage management system 10 may be configured to operate as a server and be able to be displayed or operated from a client such as a PC or smartphone using a browser or the like. The water leakage management system 10 may be realized using a cloud service. The water leakage management system 10 may be realized, for example, as a computer such as a desktop personal computer (PC), a notebook PC, or a tablet PC, or as a mobile terminal such as a smartphone or a tablet. The water leakage management system 10 is not limited to these examples and may be realized in various forms.

### (Example of operation of water leakage management system 10)

A method for setting an analysis time period used by the processor 11 of the water leakage management system 10 to detect a water leak in the DMA 80 will be described below. The analysis time period is the time period during which the flow rate of the water supply in the DMA 80 is monitored and analyzed. As described above, the analysis time period used to detect water leakage is preferably set to a time period when water usage is low. Therefore, the processor 11 extracts a time period in which the water usage in the DMA 80 is low. The processor 11 may exclude days on which water usage in the DMA 80 is likely to be high, and then extract time periods with low water usage on days that were not excluded. Excluded days are also called special days. The time periods extracted as time periods with low water usage are candidates for time periods that can be set as the analysis time period and are also referred to as candidate time periods.

The processor 11 may extract, as candidate dates, dates on which water usage is likely to be high. A candidate date is a date that becomes a candidate for a special day. The processor 11 may extract one or more candidate dates. The processor 11 may set the dates selected from the candidate dates as special days and extract time periods with low water usage, from dates excluding the special days, as candidate time periods to be set as the analysis time period. The processor 11 may extract one or more candidate time periods. The processor 11 may extract, as candidate time periods, time periods with low water usage without setting a special day.

The processor 11 displays the extracted candidate dates on the display 15 and notifies the user of the water leakage management system 10. The processor 11 may accept, via the input interface 14, an operation input from a user to set a candidate date as a special day. When notification of a plurality candidate dates is provided, the processor 11 may accept, via the input interface 14, an operation input from a user to set some or all of the candidate dates as special days. The processor 11 may set the candidate date to a special day in response to the operation input from the user. The processor 11 may automatically set the candidate date to a special day. "Automatically set" means that the retrieval results for candidate dates are not displayed, and a special day is set without user intervention.

The processor 11 displays the extracted candidate time periods on the display 15 and notifies the user of the water leakage management system 10. The processor 11 may accept, via the input interface 14, an operation input from the user to set a candidate time period as the analysis time period. When notification of a plurality candidate dates is provided, the processor 11 may accept, via the input interface 14, operation input from the user to select which of the plurality of candidate time periods to set as the analysis time period. The processor 11 may set the candidate time period as the analysis time period in response to the operation input from the user.

The processor 11 may automatically set a candidate time period as the analysis time period. "Automatically set" means that the retrieval results for candidate time period are not displayed, and the analysis time period is set without user intervention.

The processor 11 may notify the user of the water leakage management system 10 of only the extraction results for the candidate dates. In this case, the user can determine special days from the candidate dates, manually extract a time period with low water usage on a day excluding the special days, and set this time period as the analysis time period.

As described above, the water leakage management system 10 uses the performance data of the water usage in the DMA 80 to extract the candidate time periods. In the water supply system 1 according to the present disclosure, the performance data is stored in the DB 20. The performance data may be stored in the memory 12 of the water leakage management system 10.

The procedure for collecting performance data on water usage in the DMA 80 is described below. The flow meter 82 measures the flow rate, including water usage and leakage, in the DMA 80. The SCADA 60 acquires the measurement results from the flow meter 82 via the RTU 81 at the DMA 80 and stores the results in the DB 20 via the water leakage management system 10. In addition, the water meter 83 measures the amount of water used by water consumers within the DMA 80. The billing system 70 stores, in the DB 20 via the water leakage management system 10, the measurement results for the water usage of the water consumer in the DMA 80, the measurement results being readable from the water meter 83. The DB 20 stores the performance data on the flow rate in a form that is aggregated by time period. The DB 20 may further store the performance data on the flow rate in a form that is aggregated by day.

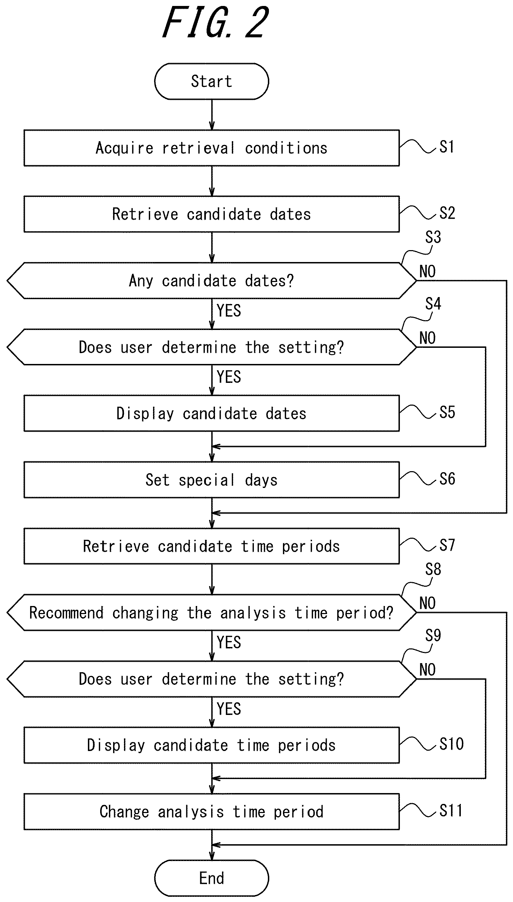

The processor 11 of the water leakage management system 10 may execute a method for setting an analysis time period, the method including the steps exemplified in the flowchart of FIG. 2. The procedure illustrated in the flowchart of FIG. 2 may be realized as a setting program to be executed by the processor 11. The setting program may be stored in a non-transitory computer readable medium such as an electromagnetic storage medium.

The processor 11 acquires retrieval conditions (step S1). The retrieval conditions are conditions used to retrieve various information for extracting candidate dates or candidate time periods.

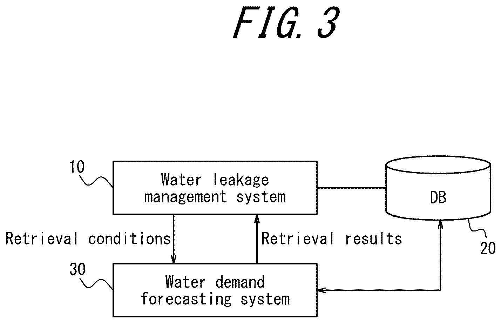

The processor 11 retrieves candidate dates using the retrieval conditions (step S2). In one embodiment, the processor 11 of the water leakage management system 10 inputs retrieval conditions for candidate dates into the water demand prediction system 30 and retrieves candidate dates by obtaining retrieval results outputted from the water demand prediction system 30, as illustrated in FIG. 3.

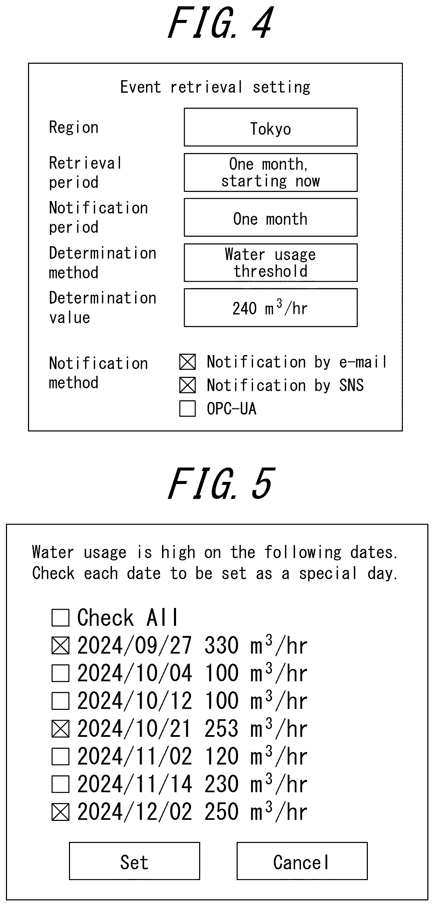

The processor 11 may set, as retrieval conditions for candidate dates, conditions for retrieving a day with high water usage, as illustrated in FIG. 4. The retrieval conditions may include, for example, a region, a retrieval period, a notification period, or a determination method and a determination value as setting items.

The region may correspond to a prefecture, city, town, village, block, building number, state, area, zone, or DMA 80 range. In the example of FIG. 4, the region is set to Tokyo, but this example is not limiting.

The retrieval period is the period from which candidate dates are retrieved. In the example of FIG. 4, the retrieval period is set to one month from now, but this example is not limiting.

The notification period is the period during which retrieval conditions are inputted to the water demand prediction system 30 and retrieval results are acquired. Although the notification period is set to one month in FIG. 4, this example is not limiting.

The determination method and determination value are conditions for determining a day with high water usage. When the determination method is a water usage threshold, days when the water usage is equal to or greater than the determination value are extracted as retrieval results. The determination value is not limited to the numerical value in the example in FIG. 4. The determination method is not limited to the water usage threshold.

The retrieval conditions may include settings for a method for notifying the user of the retrieval results when the water leakage management system 10 acquires the retrieval results. The notification method may include email, Social Network Service (SNS), OPC UA, or the like.

The processor 11 determines whether any candidate dates were retrieved (step S3). If there is no candidate date (step S3: NO), the processor 11 proceeds to the procedure of step S7.

If there is a candidate date (step S3: YES), the processor 11 determines whether the user is the one who decides to set the candidate date as a special day (step S4). In a case in which it is not the user who decides (step S4: NO), the processor 11 proceeds to the procedure of step S6. In a case in which it is the user who decides (step S4: YES), the processor 11 displays the retrieved candidate dates (step S5).

The processor 11 may acquire the retrieval results for the candidate dates and display the retrieval results on the display 15, as illustrated in FIG. 5. The processor 11 may display the retrieval results in a format that associates the date, the water usage predicted for that date, and the reliability, accuracy, or the like calculated from information such as the number of data points used for the prediction.

Referring again to FIG. 2, the processor 11 sets a special day from among the candidate dates (step S6). In the case of the user deciding to set a candidate date as a special day, the processor 11 may accept input via the input interface 14 to select a date to be set as a special day from among the candidate dates. The processor 11 may then set the special day in accordance with the input.

In the example display of the retrieval results for candidate dates in FIG. 5, the processor 11 displays check boxes corresponding to the candidate dates, and in the case of receiving an operation to check the check box and press the set button, the processor 11 sets the checked candidate dates as special days.

The processor 11 may automatically set a candidate date as a special day in the case of the user not deciding to set the candidate date as a special day. "Automatically set" means that the retrieval results for candidate dates are not displayed, and a special day is set without user intervention.

Referring again to FIG. 2, the processor 11 retrieves candidate time periods using retrieval conditions (step S7). In one embodiment, the processor 11 of the water leakage management system 10 inputs retrieval conditions for candidate time periods into the water demand prediction system 30 and retrieves candidate time periods by obtaining retrieval results outputted from the water demand prediction system 30, as illustrated in FIG. 3.

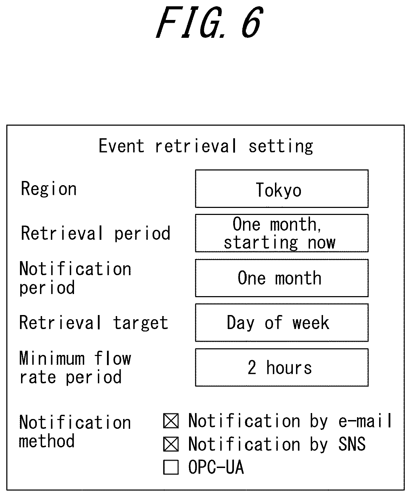

The processor 11 may set, as retrieval conditions for candidate dates, conditions for retrieving time periods with low water usage, as illustrated in FIG. 6. The retrieval conditions may include, for example, a region, a retrieval period, a notification period, a retrieval target, or a minimum flow rate period as setting items. The region, retrieval period, and notification period are the same as in the retrieval conditions for the candidate dates illustrated in FIG. 4.

The retrieval target is an item that is set so that, when the water usage tends to increase or decrease depending on the day, days on which the trend of increase or decrease in the water usage matches are grouped together and retrieved. For example, if the tendency for water usage to increase or decrease varies depending on the day of the week, by setting the retrieval target to the day of the week as in the example of FIG. 6, the time periods with low water usage for each day of the week can be extracted with high accuracy. For example, if the tendency for water usage to increase or decrease varies depending on the time range, such as the beginning, middle, or end of a month, the time periods with low water usage for each time range can be accurately extracted by setting the retrieval target to the time range. For example, if the tendency for water usage to increase or decrease differs from season to season, time periods with low water usage for each season can be extracted with high accuracy by setting the retrieval target to a season.

The minimum flow rate period is the duration of the time period for which water usage is calculated. In FIG. 6, the minimum flow rate period is set to two hours, but this example is not limiting. In this case, the two hours with the least water usage in a day are retrieved. Being able to set the duration of the time period increases the flexibility in setting the analysis time period. As the statistical value of the water usage, the maximum value, minimum value, average value, or the like of the water usage during the minimum flow rate period may be calculated. The minimum flow rate period may correspond to the duration of the time periods that the processor 11 retrieves as candidate time periods.

Referring again to FIG. 2, the processor 11 determines whether to recommend changing the analysis time period that has been set at the time when the candidate time periods are retrieved, that is, the analysis time period that is currently set (step S8). In a case in which the candidate time period and the currently set analysis time period differ, the processor 11 may determine that it is recommended to change the currently set analysis time period to the candidate time period. The processor 11 is not limited to the above-described examples and may determine that it is recommended to change the currently set analysis time period when various other conditions are met.

In a case of not determining that it is recommended to change the currently set analysis time period (step S8: NO), the processor 11 ends the execution of the procedure of the flowchart in FIG. 2 without changing the currently set analysis time period.

In a case of determining that it is recommended to change the currently set analysis time period (step S8: YES), the processor 11 determines whether the user will be the one to decide to set the candidate time period as the analysis time period (step S9). In a case in which it is not the user who decides (step S9: NO), the processor 11 proceeds to the procedure of step S11. In a case in which it is the user who decides (step S9: YES), the processor 11 displays the retrieved candidate time periods (step S10).

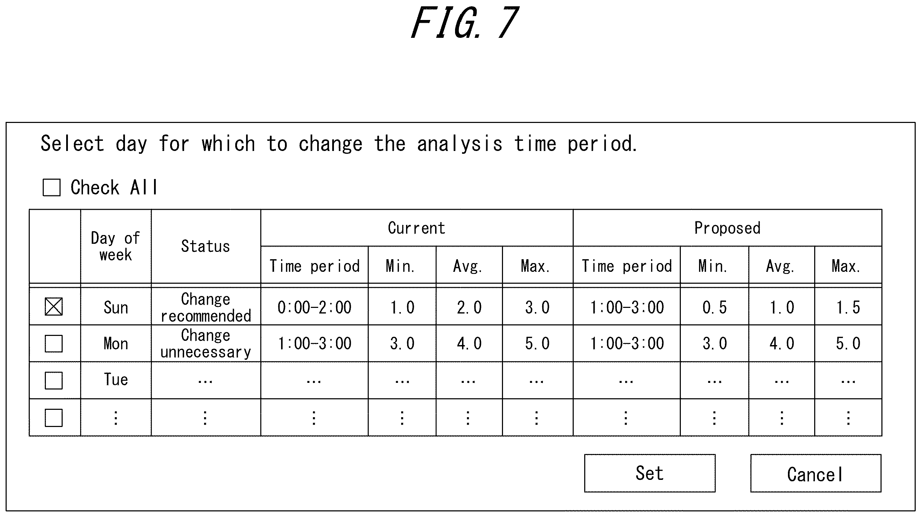

The processor 11 may acquire retrieval results for candidate time periods extracted as time periods with low water usage and display the retrieval results on the display 15. When the retrieval target is a day of the week, the processor 11 may display the retrieval results in a format in which the days of the week are associated with the candidate time periods for each day of the week. The processor 11 may display the retrieval results in a format that associates the days of the week with the analysis time period that has been set for each day of the week, i.e., the analysis time period currently set for each day of the week, and the candidate time period proposed as the new analysis time period for each day of the week, as illustrated in FIG. 7. That is, the processor 11 may display the currently set analysis time period and the candidate time period in a manner that allows comparison. By such display, the user can easily determine whether to change the analysis time period.

The processor 11 may display statistical values of water usage, such as the minimum, average, and maximum values of water usage in each candidate time period, in association with the candidate time period.

In a case in which the retrieval target is a time range, the processor 11 may display the retrieval results in a format in which the time ranges are associated with candidate time periods for each time range. In a case in which the retrieval target is a season, the processor 11 may display the retrieval results in a format in which the seasons are associated with candidate time periods for each season.

The processor 11 changes the currently set analysis time period (step S11). In a case in which it is the user who decides to set the candidate time period as the analysis time period, the processor 11 receives an operation input from the user via the input interface 14 to set the candidate time period as the analysis time period. The processor 11 may change the currently set analysis time period by setting the candidate time period as the analysis time period in response to the operation input received from the user. For example, in the example display of retrieval results for a candidate time period for each day of the week illustrated in FIG. 7, the processor 11 may display a check box for each day of the week, and in the case of receiving an operation to check the check box and press the set button, the processor 11 may change the currently set analysis time period to the checked day of the week.

In a case in which the user is not the one who decides to set the candidate time period as the analysis time period, the processor 11 may change the currently set analysis time period by automatically setting the candidate time period as the analysis time period. "Automatically set" means that the retrieval results for candidate time period are not displayed, and the analysis time period is set without user intervention.

After executing the procedure of step S11, the processor 11 ends the execution of the procedures in the flowchart in FIG. 2.

The processor 11 does not need to execute the steps from step S2 of retrieving candidate dates to step S6 of setting special days. The processor 11 may execute the steps from step S7 of retrieving candidate time periods to step S11 of changing the analysis time period before executing the steps from step S2 of retrieving candidate dates to step S6 of setting special days.

In a case in which the processor 11 executes the procedure of retrieving candidate time periods in step S7 after the procedure of setting special days in step S6, the accuracy of retrieving time periods with low water usage can be improved by retrieving time periods with low water usage on days excluding special days.

The processor 11 may set the candidate time period as the analysis time period in response to operation input from the user, without executing the determination procedure of step S8. In the example display of candidate time periods in FIG. 7, the processor 11 may determine that it is recommended to change the analysis time period set for Sunday, because the analysis time period currently set for Sunday is different from the candidate time period extracted for Sunday. The processor 11 may display that change is recommended as the status of the analysis time period currently set for Sunday. On the other hand, since the analysis time period currently set for Monday matches the candidate time period extracted for Monday, the processor 11 may refrain from determining that it is recommended to change the analysis time period currently set for Monday, and may display that change is unnecessary as the status of the analysis time period currently set for Monday. The user can easily determine whether to change the analysis time period based on the display of the status of the analysis time period.

The processor 11 may be configured to allow the user to set a notification of candidate time periods. For example, even if a notification period is set in the retrieval conditions, the user may make a setting that notification not required, so that the processor 11 does not provide notification of the retrieval results for candidate time periods when the notification period is complete, or does not retrieve candidate time periods. The processor 11 may also be configured to provide notification in a case in which it is recommended to change the analysis time period, or may be configured to provide notification each time a candidate time period is retrieved, regardless of the retrieval results.

### (Summary)

As described above, according to the setting program, setting method, and water leakage management system 10 of the present embodiment, time periods with low water usage can be easily extracted without relying on human experience or intuition. As a result, the time period for analyzing the water flow rate to detect water leaks can be easily set. The set analysis time period is used to periodically monitor the water flow rate during the analysis time period and determine whether there is a possibility of a water leak from a water pipe.

### (Other embodiments)

Other embodiments of the water leakage management system 10 will be described below.

### <Case of using generative AI 40>

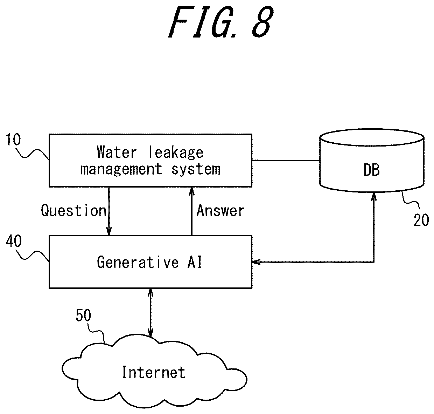

In another embodiment, the processor 11 of the water leakage management system 10 may retrieve candidate dates or candidate time periods by inputting a question to the generative AI 40 to retrieve candidate dates or candidate time periods and acquiring the answer outputted from the generative AI 40, as illustrated in FIG. 8.

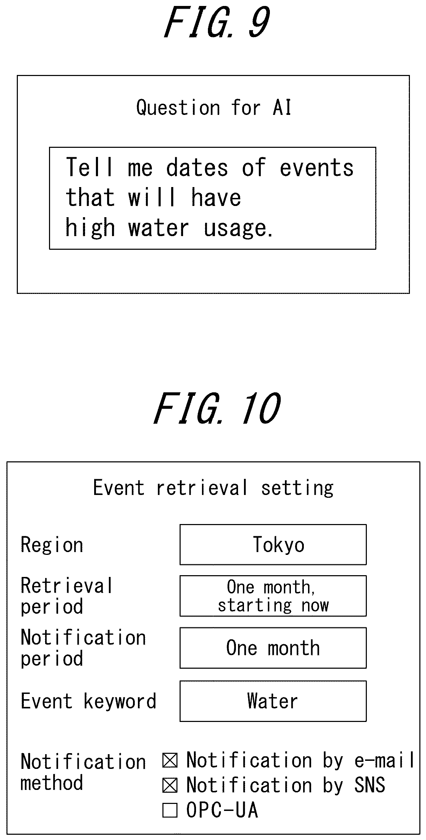

The processor 11 may, for example, accept the question illustrated in FIG. 9 as a free input from the user, input the question into the generative AI 40, and acquire, as the answer from the generative AI 40, the retrieval results for dates of events that are scheduled to be held in the water purification management area corresponding to the DMA 80 and that will have high water usage, i.e., candidate dates. The question may more specific: "Tell me the dates of water-related events in Tokyo during the next month, day by day, in YYYY/MM/DD format".

The processor 11 may create a question to be inputted to the generative AI 40 based on the event retrieval setting items illustrated in FIG. 10, for example, and input the created question to the generative AI 40. The event retrieval setting items may be items to be applied to a question template. A question template may, for example, be, "Tell me the dates of events related to [keyword] in [region] during [period], day by day in YYYY/MM/DD format". By applying the event retrieval setting items of FIG. 10 to the question template, the processor 11 can generate a question such as, "Tell me the dates of water-related events in Tokyo during the next month, day by day, in YYYY/MM/DD format".

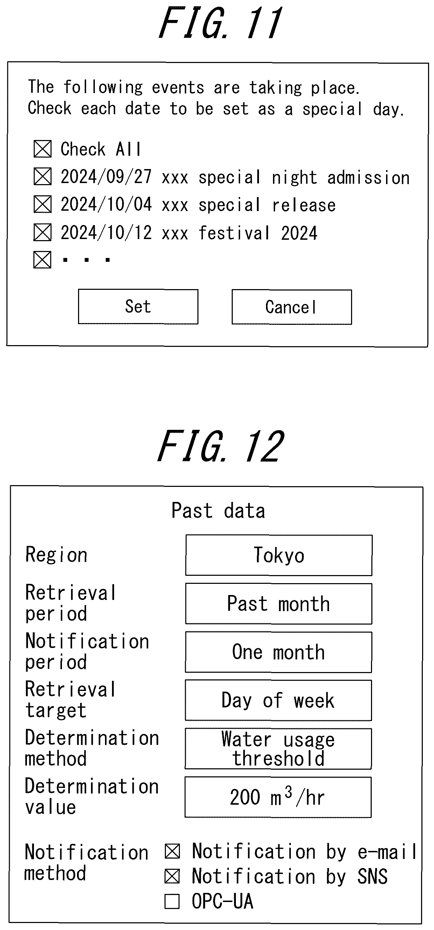

In response to the input question, the generative AI 40 responds with retrieval results for dates of events that will have high water usage, i.e., candidate dates. The generative AI 40 may acquire information from the Internet 50 or the DB 20 to generate an answer. The processor 11 may acquire the answer from the generative AI 40 and display the retrieval results for the candidate dates included in the answer on the display 15, as illustrated in FIG. 11. The processor 11 may display the retrieval results in a format in which dates are associated with water-related events taking place on those dates.

The processor 11 displays check boxes corresponding to the dates on which water-related events are held, and in the case of receiving an operation to check the check box and press the set button, the processor 11 sets the checked dates as special days. The processor 11 may automatically set the date on which a water-related event is held as a special day. "Automatically set" means that the retrieval results for dates of water-related events are not displayed, and a special day is set without user intervention. By retrieval of events, candidate dates are efficiently extracted.

The processor 11 may create a question to be inputted to the generative AI 40 based on the retrieval conditions for past data illustrated in FIG. 12, for example, and input the created question to the generative AI 40. The retrieval conditions for past data may include, for example, a region, a retrieval period, a notification period, a retrieval target, or a determination method and a determination value as setting items. The region, retrieval period, notification period, determination method, and determination value are the same as in the retrieval conditions for candidate dates illustrated in FIG. 4. The retrieval target is the same as in the retrieval conditions for the candidate time periods illustrated in FIG. 6.

The setting items in the retrieval conditions for past data may be items that are applied to a question template. By applying the setting items in the retrieval conditions for past data in FIG. 12 to the question template, the processor 11 can generate a question such as, "Output the average water usage by day of the week for the past month of water usage data, and tell me which day of the week has the most water usage".

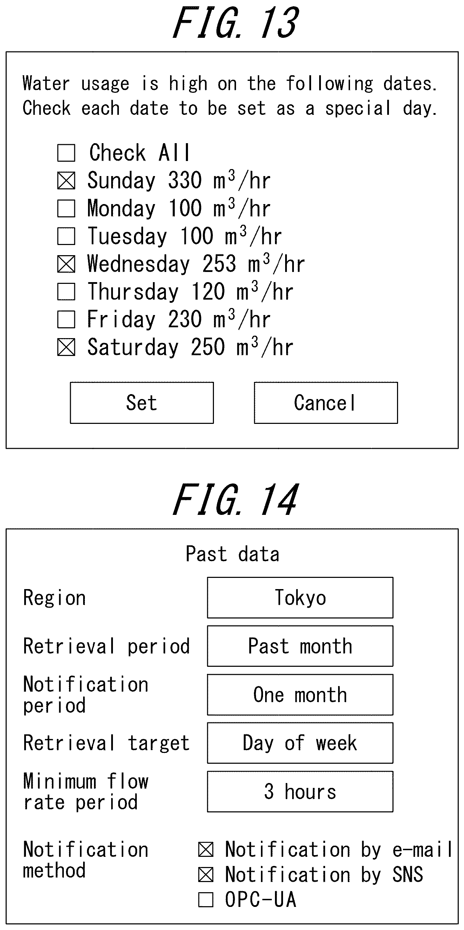

In response to the input question, the generative AI 40 outputs the average water usage by day of the week as the answer. The generative AI 40 may acquire past data from the DB 20 and generate the answer. The processor 11 may acquire the answer from the generative AI 40 and display the answer on the display 15 as illustrated in FIG. 13. The processor 11 may display the answer in a format in which the days of the week are associated with the average water usage by day of the week. The processor 11 displays check boxes corresponding to the days of the week, and in the case of receiving an operation to check the check box and press the set button, the processor 11 sets the checked day of the week as a special day. The processor 11 may automatically set a day of the week on which the average water usage is equal to or greater than the determination value as a special day. "Automatically set" means that the retrieval results for days of the week on which the average water usage is equal to or greater than the determination value are not displayed, and a special day is set without user intervention.

The processor 11 may create a question to be inputted to the generative AI 40 based on the retrieval conditions for past data illustrated in FIG. 14, for example, and input the created question to the generative AI 40. The retrieval conditions for past data may include, for example, a region, a retrieval period, a notification period, a retrieval target, or a minimum flow rate period as setting items. The region, retrieval period, and notification period are the same as in the retrieval conditions for the candidate dates illustrated in FIG. 4. The retrieval target and minimum flow rate period are the same as in the retrieval conditions for the candidate time periods illustrated in FIG. 6.

The setting items in the retrieval conditions for past data may be items that are applied to a question template. By applying the setting items in the retrieval conditions for past data in FIG. 14 to the question template, the processor 11 can generate a question such as, "Over the past one month period, tally up the starting and ending time during which water usage was low during the day for each day of the week. However, exclude special days". The "special day" in the question may be replaced with a specific date set to a special day, such as a date "A/B", where A is the month, and B is the day.

In response to the input question, the generative AI 40 outputs the time period with low water usage for each day of the week, along with the water usage during those time periods, as the answer. The generative AI 40 may acquire past data from the DB 20 and generate the answer. The processor 11 may acquire the answer from the generative AI 40 and display the answer on the display 15 as illustrated in FIG. 7. The processor 11 may display the answer in a format that associates the days of the week, the time period with the lowest water usage for each day of the week, and the water usage during those time periods. The processor 11 may display check boxes corresponding to the days of the week, and in the case of receiving an operation to check the check box and press the set button, the processor 11 may change the analysis time period for the checked day of the week to the time period in the answer from the generative AI 40. The processor 11 may automatically change the analysis time period by setting the time period in the answer from the generative AI 40 as the analysis time period. "Automatically set" means that the time period in the answer from the generative AI 40 is not displayed, and the analysis time period is set without user intervention.

### <Case of using weather forecast information>

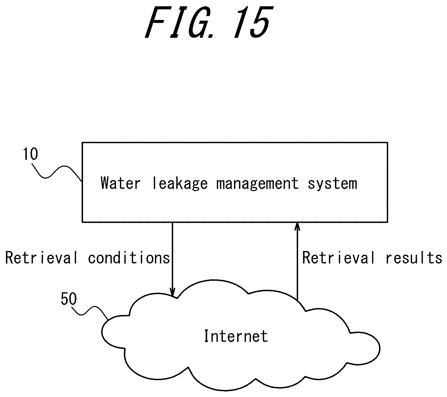

As illustrated in FIG. 15, the processor 11 of the water leakage management system 10 may transmit retrieval conditions related to weather conditions to a service, site, or the like accessible via the Internet 50 and receive retrieval results for days that meet the weather conditions. The processor 11 may, for example, transmit retrieval conditions to an API (Application Programming Interface) that provides weather forecasts and receive the retrieval results. The processor 11 may, for example, acquire weather forecast information by web scraping from a website that provides weather forecasts and may extract days that meet the weather conditions.

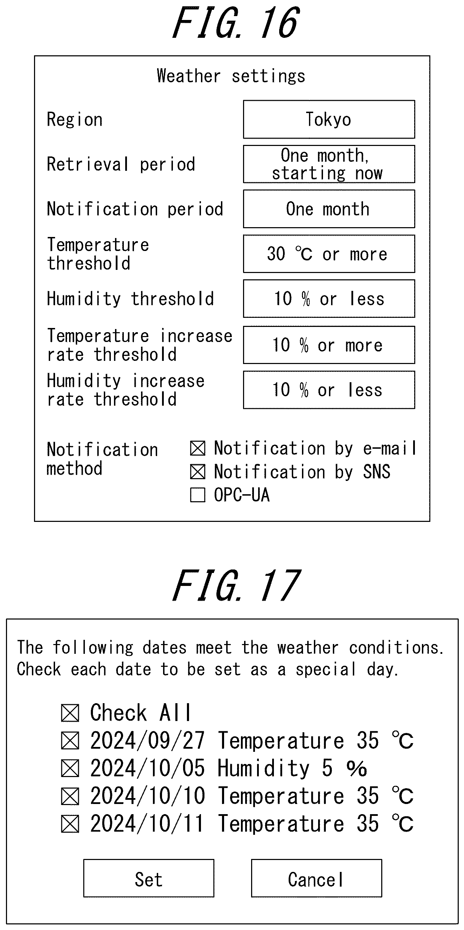

The processor 11 may set retrieval conditions related to weather conditions, as illustrated in FIG. 16. The weather conditions may include conditions for retrieving future temperature or humidity.

The retrieval conditions may include, as setting items, a region, a retrieval period, a notification period, a temperature threshold, a humidity threshold, a temperature increase rate threshold, or a humidity increase rate threshold. The region, retrieval period, and notification period are the same as in the retrieval conditions for the candidate dates illustrated in FIG. 4.

The temperature threshold is a condition related to the predicted temperature. In the example in FIG. 16, days when the predicted temperature is 30 °C or higher are extracted by retrieval. The humidity threshold is a condition related to the predicted humidity. In the example in FIG. 16, days when the predicted humidity is 10 % or less are extracted by retrieval. The temperature increase rate threshold is a condition for extracting days on which the increase rate of the predicted temperature from the previous day exceeds the temperature increase rate threshold. In the example in FIG. 16, days on which the temperature increase rate is 10 % or more are extracted by retrieval. The humidity increase rate threshold is a condition for extracting days on which the increase rate of the predicted humidity from the previous day exceeds the humidity increase rate threshold. In the example in FIG. 16, days on which the humidity increase rate is 10 % or less are extracted by retrieval.

The processor 11 may acquire the retrieval results for the days that meet the weather conditions and display the retrieval results on the display 15, as illustrated in FIG. 17. The processor 11 may display the retrieval results in a format in which a day that meets a weather condition is associated with the weather condition met on that day. The processor 11 may display all of the weather information.

The processor 11 displays check boxes corresponding to the dates that meet the weather conditions, and in the case of receiving an operation to check the check box and press the set button, the processor 11 sets the checked dates as special days. The processor 11 may automatically set a date that meets the weather conditions as a special day. "Automatically set" means that the retrieval results for dates that meet the weather conditions are not displayed, and a special day is set without user intervention.

By retrieval based on future temperature or humidity, candidate dates that may have high water usage are efficiently extracted.

Although an embodiment of the present disclosure has been described above with reference to the drawings, the specific configuration is not limited to this embodiment, and various modifications that do not deviate from the spirit of the present disclosure are included in the scope thereof.

## Claims

1. A setting program configured to cause a processor (11) to perform operations comprising:
a step of acquiring retrieval conditions used to set a time period with low water usage as an analysis time period for presence or absence of water leakage in a water purification management area (80); and
at least one of a step of retrieving and displaying a candidate date that can be set as a special day with high water usage in the water purification management area (80) based on the retrieval conditions, and a step of retrieving and displaying a candidate time period that can be set as the analysis time period on a day other than the special day based on the retrieval conditions.

2. The setting program according to claim 1, wherein the setting program causes the processor (11) to perform at least one of a step of setting the special day from among a plurality of the candidate dates and a step of setting the analysis time period from among a plurality of the candidate time periods.

3. The setting program according to claim 2, wherein the setting program causes the processor (11) to perform a step of retrieving and displaying the candidate time period for a day other than the special day after the step of setting the special day.

4. The setting program according to any one of claims 1 to 3, wherein the step of retrieving and displaying the candidate time period comprises displaying the candidate time period that was retrieved and a value or statistical value of water usage in the candidate time period in a manner allowing comparison with the analysis time period currently set and a value or statistical value of water usage in the analysis time period.

5. The setting program according to claim 4, wherein the step of retrieving and displaying the candidate time period comprises displaying the candidate time period that was retrieved in a case of recommending to change the analysis time period currently set to the candidate time period that was retrieved.

6. The setting program according to any one of claims 1 to 5, wherein the retrieval conditions comprise a duration of a time period for retrieval as the candidate time period in the water purification management area (80).

7. The setting program according to any one of claims 1 to 6, wherein the retrieval conditions comprise a condition for retrieving an event that is scheduled to be held in the water purification management area (80) and that will have high water usage.

8. The setting program according to any one of claims 1 to 7, wherein the retrieval conditions comprise a condition for retrieving a future temperature or humidity in the water purification management area (80).

9. A setting method to be executed by a processor (11), the setting method comprising:
a step of acquiring retrieval conditions used to set a time period with low water usage as an analysis time period for presence or absence of water leakage in a water purification management area (80); and
at least one of a step of retrieving and displaying a candidate date that can be set as a special day with high water usage in the water purification management area (80) based on the retrieval conditions, and a step of retrieving and displaying a candidate time period that can be set as the analysis time period on a day other than the special day based on the retrieval conditions.

10. A water leakage management system (10) comprising:
a processor (11), wherein
the processor (11) is configured to
acquire retrieval conditions used to set a time period with low water usage as an analysis time period for presence or absence of water leakage in a water purification management area (80), and
perform at least one of a) retrieving and displaying a candidate date that can be set as a special day with high water usage in the water purification management area (80) based on the retrieval conditions, and b) retrieving and displaying a candidate time period that can be set as the analysis time period on a day other than the special day based on the retrieval conditions.
